# EUROPÄISCHE PATENTANMELDUNG

(11) **EP 2 280 193 A2**
(43) Veröffentlichungstag der Anmeldung: **02.02.2011**
(21) Anmeldenummer: 10166866.3
(22) Anmeldetag: 22.06.2010
(51) Int. Cl.: F16H 57/04, F16H 1/46

(54) **Planetengetriebe**

(30) Priorität: 27.07.2009 DE 102009034833
(71) Anmelder: Siemens Aktiengesellschaft, 80333 München (DE)
(72) Erfinder: Höbing, Mathias, 48734, Reken (DE)

(57) **Zusammenfassung**

Die Erfindung betrifft ein Planetengetriebe mit einem Hohlrad (1), mehreren in einem Planetenradträger (3) gelagerten Planetenrädern (2) und einem Sonnenrad (4) sowie einer Antriebswelle (5) und einer Abtriebswelle (6). Außerdem weist das erfindungsgemäße Planetengetriebe eine an das Sonnenrad (4) angebundene und in einem Getriebegehäuse (14) angeordnete Zahnkupplung (7), deren Verzahnung (9) von einer zumindest axial verschiebbaren Kupplungshülse (8) umgeben ist. In der Kupplungshülse (8) ist ein Schmierstoffzuführungskanal (10) angeordnet, der an einem der Verzahnung (9) der Zahnkupplung (7) zugewandten Abschnitt der Kupplungshülse (9) endet. Mit der Kupplungshülse (9) ist ein an den Schmierstoffzuführungskanal (10) angeschlossener Rohrkompensator (12) verbunden. Der Rohrkompensator (12) verbindet den Schmierstoffzuführungskanal (10) und einen Schmierstoffversorgungskanal (10), der in einer mit der Zahnkupplung (7) drehbar beweglichen Welle vorgesehen ist.

## Beschreibung

### Beschreibung

### Planetengetriebe

Getrieben für industrielle Anwendungen, insbesondere Planetengetrieben, kommt in industriellen Verarbeitungs- und Fertigungsprozessen vielfach eine zentrale Bedeutung zu. An Industriegetriebe wird eine breite Palette von komplexen Anforderungen. Beispielsweise ist eine dieser Anforderungen eine zuverlässige Funktion, die über eine lange Nutzungsdauer bei minimalem Wartungsaufwand zu gewährleisten ist. Industrielle Verarbeitungs- und Fertigungsprozesse beeinträchtigende Getriebeausfälle können teuer werden, beispielsweise aufgrund kostspieliger Stillstandszeiten.

Bei Planetengetrieben mit einer an ein Sonnenrad angebundenen, in einem Getriebegehäuse angeordneten Zahnkupplung, deren Verzahnung von einer zumindest axial verschiebbaren Kupplungshülse umgeben ist, ist eine wirksame Schmierstoffzuführung zur Kupplungsverzahnung zu gewährleisten. Entsprechend bisherigen Lösungen erfolgt eine Anspritzung der Kupplungsverzahnung über außerhalb der Kupplung angeordnete Bauteile aus einem relativ großen Abstand. Dies ist nur mäßig wirkungsvoll.

Der vorliegenden Erfindung liegt die Aufgabe zugrunde, ein Planetengetriebe mit einer an ein Sonnenrad angebundenen, in einem Getriebegehäuse angeordneten Zahnkupplung zu schaffen, die zuverlässig und wirksam mit Schmierstoff versorgt wird.

Diese Aufgabe wird erfindungsgemäß durch ein Planetengetriebe mit den in Anspruch 1 angegebenen Merkmalen gelöst. Vorteilhafte Weiterbildungen der vorliegenden Erfindung sind in den abhängigen Ansprüchen angegeben.

Das erfindungsgemäße Planetengetriebe umfaßt ein Hohlrad, mehrere in einem Planetenradträger gelagerte Planetenräder und ein Sonnenrad sowie eine Antriebswelle und eine Abtriebswelle. Außerdem weist das erfindungsgemäße Planetengetriebe eine an das Sonnenrad angebundene und in einem Getriebegehäuse angeordnete Zahnkupplung, deren Verzahnung von einer zumindest axial verschiebbaren Kupplungshülse umgeben ist. In der Kupplungshülse ist ein Schmierstoffzuführungskanal angeordnet, der an einem der Verzahnung der Zahnkupplung zugewandten Abschnitt der Kupplungshülse endet. Am Ende des Schmierstoffzuführungskanals kann im Bereich eines Verzahnungseingriffs beispielsweise eine Düse angeordnet sein. Mit der Kupplungshülse ist ein an den Schmierstoffzuführungskanal angeschlossener Rohrkompensator verbunden. Der Rohrkompensator verbindet den Schmierstoffzuführungskanal und einen Schmierstoffversorgungskanal, der in einer mit der Zahnkupplung drehbar beweglichen Welle vorgesehen ist. Durch Einleitung von Schmierstoff für die Verzahnung der Zahnkupplung über den Rohrkompensator und die Schmierstoffzuführungskanäle in der Kupplungshülse ergibt sich eine direktere und damit effizientere Schmierstoffversorgung.

Entsprechend einer bevorzugten Ausgestaltung des erfindungsgemäßen Planetengetriebes ist im Getriebegehäuse konzentrisch zur Sonnenradachse ein Einsatzring angeordnet, der von einem Schmierstoffverteilungskanal durchdrungen ist. Der Schmierstoffverteilungskanal ist einerseits mit einer Schmierstoffpumpe und andererseits mit Schmierstoffzuführungskanälen im Planetenradträger verbunden. Darüber hinaus ist der Einsatzring als Gleitlager oder Gleitlagerelement für den Planetenradträger ausgestaltet. Das in den Einsatzring integrierte Gleitlager bzw. Gleitlagerelement ermöglicht Kosteneinsparungen durch eine Reduktion der Anzahl verwendeter Bauteile sowie eine effizientere Ausnutzung des zur Verfügung stehenden Bauraums. Außerdem wird eine Schmierstoffversorgung von Planetenradlagern und Planetenträgerlagern vereinfacht.

Der Einsatzring kann beispielsweise eine radiale bzw. axiale Kontaktfläche zum Planetenradträger bzw. zu einem Planetenradträger einer weiteren Getriebestufe aufweisen. Dabei kann die radiale bzw. axiale Kontaktfläche durch einen sich axial bzw. radial erstreckenden Schenkel Einsatzrings gebildet sein. Im Bereich der radialen bzw. axialen Kontaktfläche kann beispielsweise ein Gleitlagerwerkstoff am Einsatzring bzw. Planetenträger vorgesehen sein. Alternativ oder zusätzlich dazu kann im Bereich der radialen bzw. axialen Kontaktfläche in zumindest einem Betriebszustand des Planetengetriebes eine Schmierstoffschicht gebildet sein. Auf diese Weise ergibt sich eine sehr einfach zu realisierende Planetenradträgerlagerung, insbesondere auch bei mehrstufigen Planetengetrieben.

Die vorliegende Erfindung wird nachfolgend an einem Ausführungsbeispiel anhand der Zeichnung näher erläutert. Es zeigt
- Figur 1: eine Längsschnittdarstellung eines mehrstufigen Planetengetriebes,
- Figur 2: eine vergrößerte Darstellung eines ersten Aus- schnitts aus der Längsschnittdarstellung gemäß Fi- gur 1,
- Figur 3: eine vergrößerte Darstellung eines zweiten Aus- schnitts aus der Längsschnittdarstellung gemäß Fi- gur 1,
- Figur 4: eine vergrößerte Darstellung eines dritten Aus- schnitts aus der Längsschnittdarstellung gemäß Fi- gur 1.

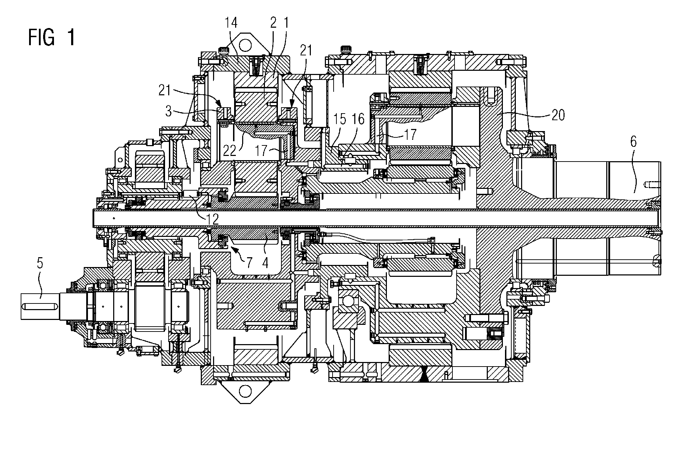

Das in Figur 1 dargestellte Planetengetriebe weist zwei Planetenstufen, die innerhalb eines Getriebegehäuses 14 angeordnet sind, sowie eine Antriebswelle 5 und eine Abtriebswelle 6 auf. Eine erste Planetenstufe umfaßt ein mit dem Getriebegehäuse 14 fest verbundenes Hohlrad 1, mehrere in einem Planetenträger 3 gelagerte Planetenräder 2 und ein Sonnenrad 4. Die Planetenräder 2 stehen sowohl mit dem Hohlrad 1 als auch mit dem Sonnenrad 4 in Eingriff, und der Planetenträger 3 ist mit der Antriebswelle 5 verbunden. Der Planetenträger 3 ist im Getriebegehäuse 7 drehbar gelagert und umfaßt zwei Seitenwangen 21, die Aufnahmen für Planetenradachsen 22 aufweisen und durch mehrere Stege verbunden sind. Eine zweite Planetenstufe des in Figur 1 dargestellten Planetengetriebes hat einen zur ersten Planetenstufe analogen Aufbau, wobei ein Planetenträger 20 der zweiten Planetenstufe mit der Abtriebswelle 6 verbunden ist. Zwischen der ersten Planetenstufe und der Antriebswelle 5 ist eine zusätzliche Stirnradstufe vorgesehen.

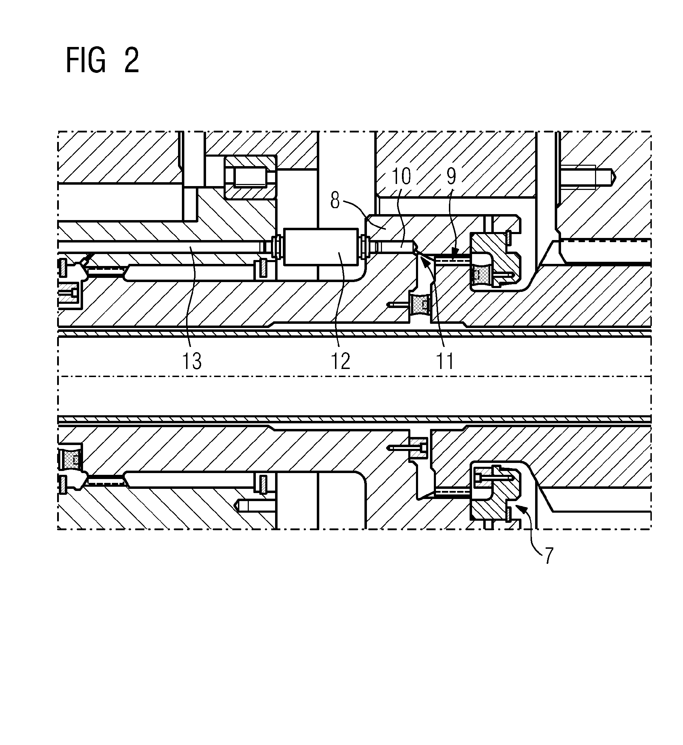

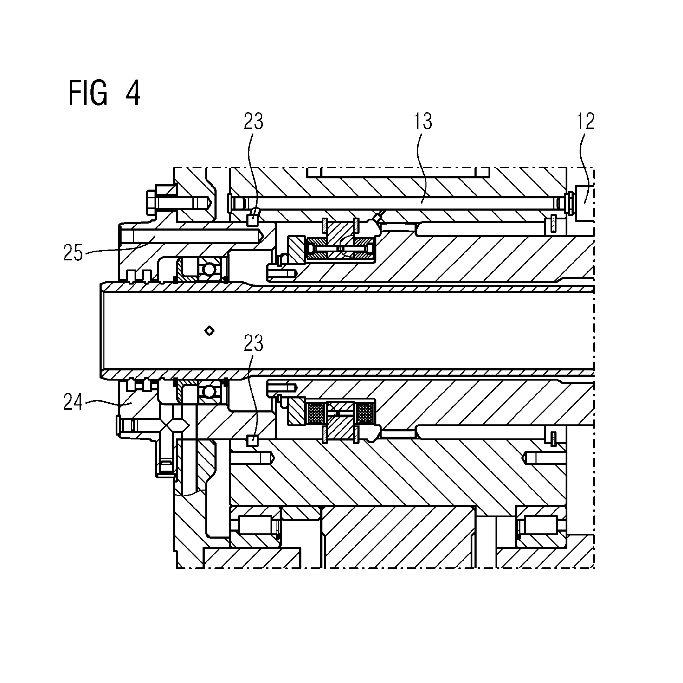

Anhand der Darstellung in Figur 2 ist im Detail zu erkennen, daß im Getriebegehäuse 14 eine an das Sonnenrad 4 angebundene Zahnkupplung 7 angeordnet ist, deren Verzahnung 9 von einer zumindest axial gegenüber dem Sonnenrad 4 verschiebbaren Kupplungshülse 8 umgeben ist. In der Kupplungshülse 8 ist ein Schmierstoffzuführungskanal 10 angeordnet, der an einem der Verzahnung 9 der Zahnkupplung 7 zugewandten Abschnitt der Kupplungshülse 8 endet. Am Ende des Schmierstoffzuführungskanals 10 ist im Bereich eines Verzahnungseingriffs eine Düse 11 angeordnet. Mit der Kupplungshülse 8 ist ein an den Schmierstoffzuführungskanal 10 angeschlossener Rohrkompensator 12 verbunden. Der Rohrkompensator 12 verbindet den Schmierstoffzuführungskanal 10 und einen Schmierstoffversorgungskanal 13, der in einer mit der Zahnkupplung 7 drehbar beweglichen Welle vorgesehen ist. Dieser Schmierstoffversorgungskanal 13 steht über Schmierstoffversorgungskanäle im Getriebegehäuse 14 mit einer nicht näher dargestellten Schmierstoffpumpe in Verbindung. Entsprechend der Detaildarstellung in Figur 4 endet der Schmierstoffversorgungskanal 13 an einer umlaufenden Ringnut 23, die zwischen einem Gehäusedeckel 24 und der mit der Zahnkupplung 7 drehbar beweglichen Welle gebildet ist. Die Ringnut 23 mündet wiederum in Schmierstoffversorgungskanäle 25 im Gehäusedeckel 24, die über Schmierstoffversorgungskanäle im Getriebegehäuse 14 mit der Schmierstoffpumpe in Verbindung stehen. Entsprechend einer bevorzugten Ausgestaltung der vorliegenden Erfindung ist der Gehäusedeckel 24 als Gleichlagerelement für eine von einem Gehäusedeckelabschnitt umgebene Welle ausgestaltet.

Mittels der Schmierstoffpumpe wird eine definierte Menge Schmierstoff zwangsweise und kontinuierlich zu Schmierungsstellen an Planetenradlagern und Verzahnungseingriffen geführt. Hierdurch werden insbesondere die Planetenradlager ständig von Schmierstoff durchströmt und damit gleichzeitig sowohl geschmiert als auch durchspült und gekühlt. Von den Schmierungsstellen an Planetenradlagern und Verzahnungseingriffen austretender Schmierstoff sammelt sich in einem Schmierstoffsumpf in einem Bodenbereich des Getriebegehäuses 14 und wird von dort beispielsweise wieder von der Schmierstoffpumpe angesaugt. Der durch die Schmierstoffpumpe angesaugte Schmierstoff kann dabei filtriert und je nach Anwendungsanforderungen gekühlt werden.

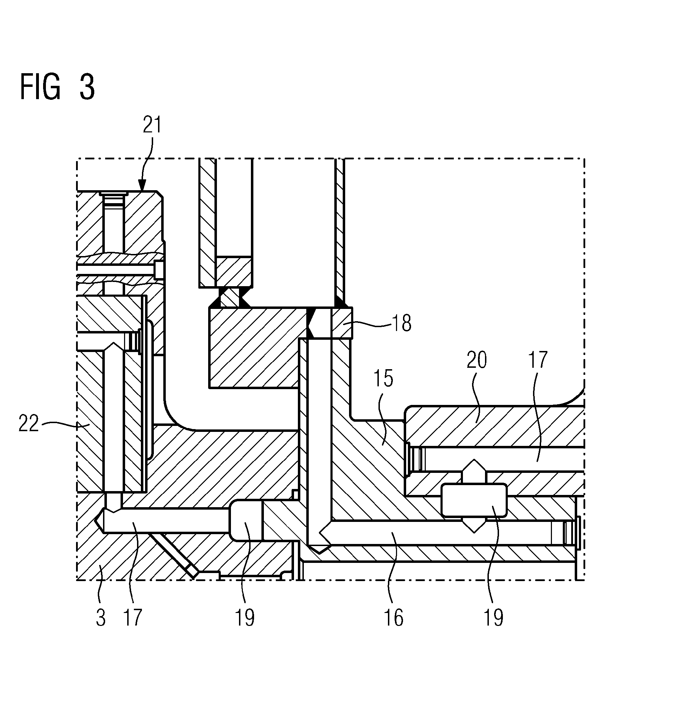

Im Getriebegehäuse 14 ist darüber hinaus ein Einsatzring 15 zwischen den beiden Planetenstufen und konzentrisch zur Sonnenradachse angeordnet. Dies ist in Figur 3 im Detail dargestellt. Der Einsatzring 15 ist fest mit einer Gehäusewand 18 verbunden und von einem Schmierstoffverteilungskanal 16 durchdrungen. Der Schmierstoffverteilungskanal 16 ist einerseits mit der Schmierstoffpumpe und andererseits mit Schmierstoffzuführungskanälen 17 in den Planetenradträgern 3, 20 verbunden.

Die Schmierstoffzuführungskanäle 17 weisen jeweils einer in einer Seitenwange 21 der Planetenradträger 3, 20 angeordneten ersten Abschnitt und zweite Abschnitte auf, die sich jeweils innerhalb von Planetenradachsen im wesentlichen achsparallel zu diesen erstrecken. Die Schmierstoffzuführungskanäle 17 enden im vorliegenden Ausführungsbeispiel an Schmierungsstellen für Planetenradlager und Verzahnungseingriffe.

Der Einsatzring 15 ist als ein Gleitlagerelement für die Planetenträger 3, 20 ausgestaltet, das mit an den Einsatzring 15 angrenzenden axialen und radialen Kontaktflächen der Planetenträger 3, 20 zusammenwirkt. Der Einsatzring 15 weist ebenfalls radiale und axiale Kontaktflächen zu den Planetenträgern 3, 20 auf. Im vorliegenden Ausführungsbeispiel sind die Kontaktflächen des Einsatzrings 15 durch einen sich axial erstreckenden Schenkel und durch zwei sich radial erstreckenden Schenkel des Einsatzrings 15 gebildet. Eine Axiallagerung kann auch durch zwei am Einsatzring 15 angeschraubte Gleitlagerpads erfolgen.

Zwischen dem Einsatzring 15 und den Planetenträgern 3, 20 sind in einem Anschlußbereich zwischen dem Schmierstoffverteilungskanal 16 und den Schmierstoffzuführungskanälen 17 umlaufende Ringnuten 19 vorgesehen, die sich konzentrisch zur Sonnenradachse erstrecken. Ein Übergang zwischen dem Schmierstoffverteilungskanal 16 im Einsatzring 8 und den Schmierstoffzuführungskanälen 17 im Planetenträger 3 der ersten Planetenstufe ist in Figur 3 aufgrund einer für die vorliegende Darstellung gewählten Schnittebene nicht explizit zu erkennen.

Im Bereich der Kontaktfläche kann am Einsatzring 15 und an den Planetenträgern 3, 20 ein Gleitlagerwerkstoff vorgesehen sein, beispielsweise in Form einer Bronzebeschichtung. Alternativ oder zusätzlich kann dort durch Schmierstoffzuführung über den Schmierstoffverteilungskanal 16 und die Schmierstoffzuführungskanäle bei Getriebebetrieb eine Schmierstoffschicht gebildet werden.

Die Anwendung der vorliegenden Erfindung ist nicht auf das beschriebene Ausführungsbeispiel beschränkt.

## Patentansprüche

1. Planetengetriebe mit
- einem Hohlrad, mehreren in einem Planetenradträger gelagerten Planetenrädern und einem Sonnenrad,
- einer Antriebswelle und einer Abtriebswelle,
- einer an das Sonnenrad angebundenen, in einem Getriebegehäuse angeordneten Zahnkupplung, deren Verzahnung von einer zumindest axial verschiebbaren Kupplungshülse umgeben ist,
- einem in der Kupplungshülse angeordneten Schmierstoffzuführungskanal, der an einem der Verzahnung der Zahnkupplung zugewandten Abschnitt der Kupplungshülse endet,
- einem mit der Kupplungshülse verbundenen, an den Schmierstoffzuführungskanal angeschlossenen Rohrkompensator, der den Schmierstoffzuführungskanal und einen Schmierstoffversorgungskanal verbindet, der in einer mit der Zahnkupplung drehbar beweglichen Welle vorgesehen ist.

2. Planetengetriebe nach Anspruch 1,
bei dem am Ende des Schmierstoffzuführungskanals im Bereich eines Verzahnungseingriffs eine Düse angeordnet ist.

3. Planetengetriebe nach einem der Ansprüche 1 oder 2,
bei dem im Getriebegehäuse ein Einsatzring konzentrisch zur Sonnenradachse angeordnet ist, der von einem Schmierstoffverteilungskanal durchdrungen ist, der einerseits mit einer Schmierstoffpumpe und andererseits mit Schmierstoffzuführungskanälen im Planetenradträger verbunden ist, wobei der Einsatzring als Gleitlager oder Gleitlagerelement für den Planetenradträger ausgestaltet ist.

4. Planetengetriebe nach Anspruch 3,
bei dem der Einsatzring eine radiale und/oder axiale Kontaktfläche zum Planetenradträger und/oder zu einem Planetenradträger einer weiteren Getriebestufe aufweist.

5. Planetengetriebe nach Anspruch 4,
bei dem die radiale und/oder axiale Kontaktfläche durch einen sich axial erstreckenden Schenkel und/oder durch einen sich radial erstreckenden Schenkel des Einsatzrings gebildet sind/ist.

6. Planetengetriebe nach einem der Ansprüche 4 oder 5,
bei dem im Bereich der radialen und/oder axialen Kontaktfläche ein Gleitlagerwerkstoff am Einsatzring und/oder Planetenträger vorgesehen ist.

7. Planetengetriebe nach einem der Ansprüche 2 bis 4,
bei dem im Bereich der radialen und/oder axialen Kontaktfläche eine Schmierstoffschicht in zumindest einem Betriebszustand des Planetengetriebes gebildet ist.

8. Planetengetriebe nach einem der Ansprüche 1 bis 7,
bei dem der Schmierstoffversorgungskanal in der mit der Zahnkupplung drehbar beweglichen Welle an einer umlaufenden Ringnut, die zwischen einem Gehäusedeckel und der mit der Zahnkupplung drehbar beweglichen Welle gebildet ist, und bei dem die Ringnut 23 eine Verbindung zu im Gehäusedeckel vorgesehenen Schmierstoffversorgungskanälen aufweist, und bei dem der Gehäusedeckel als Gleichlagerelement für eine von einem Gehäusedeckelabschnitt umgebene Welle ausgestaltet ist.
